# DEMANDE DE BREVET EUROPEEN

(11) **EP 3 883 207 A1**
(43) Date de publication de la demande: **22.09.2021**
(21) Numéro de dépôt: 21161153.8
(22) Date de dépôt: 08.03.2021
(51) Int. Cl.: H04L 29/06, H04L 29/08, H04W 4/70, H04W 12/08, G06F 21/60, H04W 4/00, H04W 12/088

(54) **RÉSEAU DE COLLECTE DE DONNÉES SÉCURISÉ**

(30) Priorité: 18.03.2020 FR 2002633
(71) Demandeur: ORANGE, 92130 Issy-les-Moulineaux (FR)
(72) Inventeur: AVENEL, Loic, 92326 CHATILLON CEDEX (FR); ESNAULT, Régis, 92326 CHATILLON CEDEX (FR); LANCIEN, Jean-Yves, 92326 CHATILLON CEDEX (FR)
(74) Mandataire: Plasseraud IP

(57) **Abrégé**

La présente invention concerne un réseau (NTW) de collecte de données comprenant :
- une pluralité d'équipements (EQ1, EQ2, EQ3), et
- un appareil de collecte (APP) adapté pour collecter des données générées par les équipements.

Le réseau comprend en outre une pluralité de dispositifs de type diode-réseau (DR1, DR2, DR3) respectivement associés aux équipements, chaque équipement étant connecté à l'appareil de collecte via le dispositif de type diode-réseau associé. Chaque dispositif de type diode-réseau est agencé pour rendre unidirectionnelle la connexion entre l'équipement associé et l'appareil de collecte dans le sens de l'équipement vers l'appareil de collecte.

Un tel réseau permet ainsi d'éviter, en cas d'intrusion dans un des équipements ou dans l'appareil de collecte, que l'intrusion puisse se propager aux autres équipements.

## Description

### Domaine technique

Le domaine de l'invention se rapporte à la sécurisation d'un réseau de collecte de données.

### Technique antérieure

La présente invention s'inscrit dans le contexte d'un réseau, notamment un réseau informatique, de collecte de données, à savoir un réseau présentant une architecture dans laquelle plusieurs équipements sont connectés à un appareil de collecte des données générées par ces équipements.

Une telle architecture peut par exemple être celle d'un réseau local, notamment un réseau domestique connectant des équipements électroménagers, des compteurs, des objets connectés (notamment tout équipement connecté se trouvant au domicile d'un particulier) ou faire partie d'une installation informatique d'accès à un réseau tel qu'Internet au sein du domicile d'un particulier, un réseau local utilisant des liaisons séries implémentant notamment le protocole de communication CAN (acronyme anglophone pour « *Controller Area Network* ») utilisé notamment pour l'automobile. Mais on retrouve également cette architecture dans un contexte industriel quel que soit le protocole de communication utilisé (Internet, CAN, etc.), notamment dans une usine de production ou une manufacture, pour connecter des équipements industriels tels que des machines-outils, des robots connectés, des dispositifs portables de l'internet des objets, des véhicules guidés automatiquement dits AGV (acronyme anglophone pour « *Automated Guided Vehicles* »), etc.

Typiquement, les données générées par les équipements puis collectées par l'appareil de collecte correspondent à des fichiers répertoriant les évènements ayant affecté les équipements et le réseau informatique. Un tel fichier, aussi appelé « journal » mais plus communément connu sous le terme anglophone « *log file* » ou plus simplement « *log* », permet à l'appareil de collecte d'établir un historique des événements du réseau informatique. Par ailleurs, les données peuvent également être relatives à une alerte en cas de problème ou de dysfonctionnement au niveau d'un équipement du réseau informatique. Enfin, les données peuvent également concerner des mesures ou un télérelevé d'un équipement.

Toutefois, l'architecture d'un réseau de collecte de données induit une interconnexion entre les différents équipements et l'appareil de collecte de sorte que, en cas d'intrusion dans un des équipements, il existe un risque élevé que cette intrusion s'étende aux autres équipements et à l'appareil de collecte. De même, une intrusion dans l'appareil de collecte peut se propager aux équipements. Une telle architecture facilite ainsi la propagation d'un virus informatique, d'un logiciel malveillant (plus connu sous le terme anglophone « *malware* ») ou de mécanismes autonomes d'infection informatique au sein du réseau informatique.

La perspective de telles intrusions constitue une menace :
- pour la préservation et la protection d'informations confidentielles, que ce soient des données personnelles dans le cas d'un réseau domestique ou, au niveau industriel, un secret industriel relatif à un procédé de fonctionnement d'un ou plusieurs équipements ou un procédé de fabrication d'un produit ;
- pour le fonctionnement normal d'une ligne de production d'une usine, d'un véhicule connecté, du réseau domotique d'une maison, etc.

### Résumé

La présente invention vient améliorer la situation.

A ce titre, la présente invention concerne un réseau de collecte de données comprenant :
- au moins un équipement, et
- un appareil de collecte adapté pour collecter des données générées par ledit au moins un équipement.

Le réseau est caractérisé en ce qu'il comprend en outre au moins un dispositif de type diode-réseau respectivement associé audit au moins un équipement, l'équipement étant connecté à l'appareil de collecte via le dispositif de type diode-réseau associé, le dispositif de type diode-réseau étant agencé pour rendre unidirectionnelle la connexion entre l'équipement et l'appareil de collecte dans le sens de l'équipement vers l'appareil de collecte.

Typiquement, le réseau comprend une pluralité d'équipements et une pluralité de dispositifs de type diode-réseau, au moins un équipement de la pluralité d'équipements étant connecté à l'appareil de collecte via au moins un dispositif de la pluralité de dispositifs de type diode-réseau.

Avantageusement, un équipement de type diode-réseau est associé à chaque équipement de sorte que chaque équipement est connecté à l'appareil de collecte via le dispositif de type diode-réseau associé.

Dans un ou plusieurs modes de réalisation, le réseau comprend en outre un nœud d'agrégation connecté à chaque équipement via le dispositif de type diode-réseau associé audit équipement. Le nœud d'agrégation est adapté pour agréger les données générées par les équipements, l'appareil de collecte étant adapté pour collecter les données une fois celles-ci agrégées par le nœud d'agrégation.

Par exemple, un dispositif de type diode-réseau associé à un équipement est implanté au sein dudit équipement.

Par exemple, un dispositif de type diode-réseau associé à un équipement est implanté dans le réseau à l'extérieur dudit équipement.

Dans un ou plusieurs modes de réalisation, le réseau comprend en outre au moins un commutateur configuré pour sélectivement activer ou désactiver au moins un dispositif de type diode-réseau pour pouvoir rétablir, si besoin, une connexion bidirectionnelle entre l'équipement associé audit dispositif de type diode-réseau et l'appareil de collecte.

Par exemple, le réseau est au moins en partie un réseau filaire.

Par exemple, le réseau est au moins en partie un réseau sans fil.

Dans un ou plusieurs modes de réalisation, au moins un équipement est une machine-outil.

Dans un ou plusieurs modes de réalisation, au moins un dispositif de type diode-réseau comporte un photocoupleur connectant unidirectionnellement deux contrôleurs.

Dans un ou plusieurs modes de réalisation, un procédé de fonctionnement d'un ou plusieurs équipements ou un procédé de fabrication d'un produit par un ou plusieurs équipements est caractérisé par un ensemble d'informations réparties entre des équipements de la pluralité d'équipements.

La présente invention vise également un équipement implanté au sein d'un réseau de collecte de données comportant un appareil de collecte. L'équipement est connecté à l'appareil de collecte via un dispositif de type diode-réseau associé à l'équipement, le dispositif de type diode-réseau étant agencé pour rendre unidirectionnelle la connexion entre l'équipement et l'appareil de collecte dans le sens de l'équipement vers l'appareil de collecte.

Dans un ou plusieurs modes de réalisation, l'équipement comprend le dispositif diode-réseau associé.

Enfin, l'invention vise un dispositif apte à recevoir des données générées par au moins un équipement d'un réseau de collecte de données associé à au moins un dispositif de type diode-réseau, le réseau de collecte de données comportant un appareil de collecte. Le dispositif apte à recevoir des données est connecté audit au moins un équipement via ledit au moins un dispositif de type diode-réseau, le dispositif de type diode-réseau étant agencé pour rendre unidirectionnelle la connexion entre l'équipement et l'appareil de collecte dans le sens de l'équipement vers l'appareil de collecte.

Dans un ou plusieurs modes de réalisation, le dispositif comprend au moins un nœud d'agrégation adapté pour agréger les données générées par les équipements, l'appareil de collecte étant adapté pour collecter les données une fois celles-ci agrégées par le nœud d'agrégation.

### Brève description des dessins

D'autres caractéristiques, détails et avantages apparaîtront à la lecture de la description détaillée ci-après, et à l'analyse du dessin annexé, sur lequel :

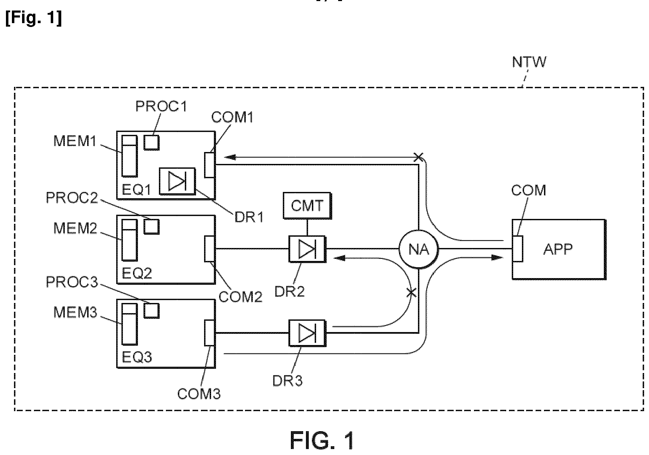

**[****Fig. 1****]** illustre un réseau de collecte de données selon l'invention.

### Description des modes de réalisation

La **[****Fig. 1****]** illustre un réseau de collecte de données, ci-après réseau NTW.

Le réseau NTW présente une architecture dans laquelle des équipements sont connectés à un appareil de collecte des données générées par ces équipements. Le réseau NTW est par exemple un réseau informatique de collecte de données.

Le réseau NTW comprend une pluralité d'équipements, ici trois équipements EQ1, EQ2, EQ3, un appareil de collecte APP, un nœud d'agrégation NA, une pluralité de dispositifs de type diode-réseau, ici trois dispositifs de type diode-réseau DR1, DR2, DR3, et un commutateur CMT.

Le réseau NTW peut être au moins en partie un réseau filaire. On entend par « au moins en partie un réseau filaire » que deux entités au moins du réseau NTW, une entité pouvant désigner un équipement de la pluralité d'équipements, l'appareil de collecte APP, le nœud d'agrégation NA ou le commutateur CMT, sont connectés entre elles par une liaison filaire.

Par ailleurs, le réseau NTW peut être au moins en partie un réseau sans fil. On entend par « au moins en partie un réseau sans fil » que deux entités au moins du réseau NTW sont connectés entre elles par une liaison sans fil.

Comme expliqué dans la partie consacrée à la technique antérieure, l'architecture du réseau NTW peut être celle d'un réseau LAN, tel qu'un réseau domestique, un réseau d'un véhicule, ou d'un réseau dans un contexte industriel.

Lorsque le réseau NTW est un réseau domestique, les équipements de la pluralité d'équipements peuvent être des équipements électroménagers, des compteurs ou faire partie d'une installation informatique d'accès à un réseau tel qu'Internet au sein du domicile d'un particulier. Ainsi, dans le contexte d'un réseau domestique, les équipements peuvent être, à titre d'exemple, un compteur électrique, une passerelle domestique (plus connue sous le terme « *Box Internet* »), un robot de cuisine, ou robot ménager, ou encore un lave-linge connecté.

Par exemple, l'équipement EQ1 est un compteur électrique, l'équipement EQ2 est une passerelle domestique et l'équipement EQ3 est un robot de cuisine.

Lorsque le réseau NTW est un réseau dans un contexte industriel, par exemple dans une usine de production ou dans une manufacture, les équipements sont des équipements industriels tels que des machines-outils.

Dans le contexte de l'invention, les équipements de la pluralité d'équipements génèrent, en fonctionnement, des données destinées à être collectées par l'appareil de collecte APP. De telles données correspondent par exemple à des fichiers répertoriant les évènements ayant affecté les équipements et le réseau NTW. Un tel fichier, communément connu sous le terme anglophone « *log file* » ou « *log* », permet à l'appareil de collecte APP d'établir un historique des événements du réseau NTW.

Les données peuvent également être relatives à une alerte en cas de problème ou de dysfonctionnement au niveau d'un des équipements du réseau NTW. Enfin, les données peuvent également concerner des mesures ou un télérelevé d'un équipement.

Par exemple, dans un contexte domestique, si l'équipement EQ1 est un compteur électrique, l'équipement EQ1 est adapté pour générer des données relatives à la consommation en électricité du domicile ou encore aux plages horaires correspondant aux heures pleines et aux heures creuses. Si l'équipement EQ2 est une passerelle domestique, l'équipement EQ2 est adapté pour générer des données relatives au débit montant, au débit descendant ou à la consommation Internet. Enfin, si l'équipement EQ3 est un robot ménager, l'équipement EQ3 est adapté pour générer des données relatives à une fréquence d'utilisation ou à une mise à jour récente. De telles données sont susceptibles d'être transmises, via le réseau NTW, à l'appareil de collecte APP.

Dans un contexte industriel, les données générées par les équipements industriels sont par exemple relatives à la consommation électrique, à l'accès à Internet pour les équipements connectés, à une mise à jour récente, par exemple mise en œuvre à distance par le constructeur, ou encore à des mesures de paramètres caractérisant le fonctionnement des équipements industriels et permettant d'avoir des informations concernant la production.

Comme illustré en **[****Fig. 1****],** chaque équipement de la pluralité d'équipement comprend au moins une mémoire, un processeur et un module de communication. Ainsi, dans l'exemple illustré ici, l'équipement EQ1 comprend une mémoire MEM1, un processeur PROC1 et un module de communication COM1, l'équipement EQ2 comprend une mémoire MEM2, un processeur PROC2 et un module de communication COM2, et l'équipement EQ3 comprend une mémoire MEM3, un processeur PROC3 et un module de communication COM3.

La mémoire d'un équipement est configurée pour stocker des instructions d'un programme informatique dont l'exécution par le processeur se traduit par le fonctionnement de l'équipement.

Par ailleurs, la mémoire d'un équipement peut également stocker tout ou partie des données générées par l'équipement, que ces données soient destinées à être collectées par l'appareil de collecte APP ou non.

La mémoire peut être aussi configurée pour stocker des informations caractérisant un procédé de fonctionnement d'un ou plusieurs équipements ou un procédé de fabrication d'un produit. Dans le contexte industriel, on parlera notamment de secret industriel. Typiquement, les informations relatives au secret industriel peuvent être réparties entre des équipements de la pluralité d'équipements. Par exemple, dans le cas décrit ici, une partie des informations relatives au secret industriel peut être stockée dans la mémoire MEM1 de l'équipement EQ1, une partie des informations relatives au secret industriel peut être stockée dans la mémoire MEM2 de l'équipement EQ2 et une partie des informations relatives au secret industriel peut être stockée dans la mémoire MEM3 de l'équipement EQ3.

Le module de communication d'un équipement est configuré pour permettre à l'équipement de communiquer avec au moins une autre entité du réseau NTW. En particulier, dans le contexte de l'invention, le module de communication d'un équipement est configuré pour émettre les données générées par cet équipement à destination de l'appareil de collecte APP. Dans le mode de réalisation, illustré en **[****Fig. 1****],** dans lequel le réseau NTW comprend en outre un nœud d'agrégation NA, on comprend que le module de communication d'un équipement est alors configuré pour émettre les données générées par l'équipement à destination du nœud d'agrégation NA.

Comme expliqué précédemment, le réseau NTW peut être au moins en partie filaire et/ou au moins en partie sans fil. On comprend ici que, sur la pluralité d'équipements, le module de communication peut être de nature différente d'un équipement à un autre.

De manière générale, l'invention peut être utilisée dans de nombreux types de réseaux de communication bidirectionnelle, tels que, par exemple des réseaux de radiocommunication, cellulaires ou non cellulaires, et qu'en fonction du mode de réalisation, le module de communication d'un équipement pourra intégrer un ou plusieurs sous-modules de communication, par exemple de communication radiofréquence et être configuré pour l'émission et la réception de signaux radiofréquences, selon une ou plusieurs technologies, telles que TDMA, FDMA, OFDMA, CDMA, ou un ou plusieurs standards de radiocommunication, tels que GSM, EDGE, CDMA, UMTS, HSPA, LTE, LTE-A, WiFi (IEEE 802.11) et WiMAX (IEEE 802.16), ou leurs variantes ou évolutions, actuellement connus ou développés ultérieurement. Un équipement peut également communiquer avec d'autres entités du réseau NTW en utilisant la technologie de communication par courants porteurs en ligne (connue sous l'acronyme « CPL ») si tout ou partie du réseau NTW est un réseau électrique.

L'appareil de collecte APP est adapté pour collecter les données générées par les équipements.

Comme expliqué précédemment, les données générées par les équipements sont typiquement des fichiers, ou « *logs* », répertoriant les évènements ayant affecté les équipements et le réseau NTW. L'appareil de collecte APP est alors adapté pour établir, sur la base des « logs » reçus, un historique des événements du réseau NTW.

L'appareil de collecte APP peut aussi être configuré pour mettre à jour un tel historique des événements lorsque les données collectées sont relatives à une alerte en cas de problème ou de dysfonctionnement au niveau d'un équipement du réseau NTW ou lorsque les données concernent des mesures ou un télérelevé d'un équipement.

Au niveau industriel, les données collectées par l'appareil de collecte APP peuvent également permettre d'établir des statistiques détaillées concernant la production d'une usine ou la consommation énergétique. L'appareil de collecte APP peut également permettre d'avoir des informations concernant les performances et le rendement des équipements.

L'appareil de collecte APP comprend un module de communication COM.

Le module de communication COM est configuré pour permettre à l'appareil de collecte APP de communiquer avec les équipements de la pluralité d'équipements du réseau NTW. En particulier, le module de communication COM est configuré pour recevoir les données générées par les équipements et émises par les modules de communication respectifs des équipements. Dans le mode de réalisation, illustré en **[****Fig. 1****],** dans lequel le réseau NTW comprend en outre un nœud d'agrégation NA, on comprend que le module de communication COM est alors configuré pour recevoir les données agrégées par le nœud d'agrégation NA.

Les considérations précédentes concernant les modules de communication respectifs des équipements et notamment les différents types de réseaux de communication de données s'appliquent bien entendu également au module de communication COM de l'appareil de collecte APP.

Dans le mode de réalisation illustré en **[****Fig. 1****],** le réseau NTW comprend un nœud d'agrégation NA.

Le nœud d'agrégation NA est connecté à chaque équipement de la pluralité d'équipements. Le nœud d'agrégation NA est adapté pour recevoir et agréger les données générées par les équipements. Le nœud d'agrégation peut être adapté en outre pour transmettre les données ainsi agrégées à l'appareil de collecte APP.

Le nœud d'agrégation NA peut permettre, par exemple, d'éviter à l'appareil de collecte de recevoir en continu les données générées par les équipements. Le nœud d'agrégation NA peut ainsi être adapté pour agréger les données reçues au cours d'une période de temps puis transférer les données ainsi agrégées à intervalles de temps réguliers.

Un dispositif de type diode-réseau est agencé pour rendre unidirectionnelle une connexion bidirectionnelle. Dans la suite de la description, le dispositif de type diode-réseau est appelé « diode-réseau » par souci de simplification. Il est toutefois compris ici que le dispositif de type diode-réseau désigne de manière générale tout dispositif présentant la fonctionnalité principale d'une diode-réseau à savoir la transformation d'une connexion bidirectionnelle en une connexion unidirectionnelle.

Le réseau NTW comprend une pluralité de diodes-réseaux. Chaque diode-réseau est associée à un équipement de sorte qu'il y a ainsi autant de diodes-réseaux que d'équipements au sein du réseau NTW.

Dans le mode de réalisation illustré en **[****Fig. 1****],** la pluralité de diodes-réseaux comprend trois diodes-réseaux DR1, DR2, DR3. Chacune de ces diodes-réseaux est associée à un équipement de la pluralité d'équipements de sorte que la diode-réseau DR1 est associée à l'équipement EQ1, la diode-réseau DR2 est associée à l'équipement EQ2 et la diode-réseau DR3 est associée à l'équipement EQ3.

En l'absence de diode-réseau, la connexion entre un équipement et l'appareil de collecte APP est bidirectionnelle. Autrement dit, des données et des informations peuvent aussi bien être transmises par un équipement à destination de l'appareil de collecte AP que l'inverse. De même, toujours en l'absence de diode-réseau et lorsque le réseau NTW comprend un nœud d'agrégation NA, des données et des informations peuvent aussi bien être transmises par un équipement à destination du nœud d'agrégation NA que l'inverse.

En revanche, dans le cadre de l'invention, le réseau NTW comprend une pluralité de diodes-réseaux de sorte que chaque équipement est connecté à l'appareil de collecte APP via la diode-réseau à laquelle il est associé.

La connexion entre un équipement et l'appareil de collecte APP est ainsi unidirectionnelle et non plus bidirectionnelle. La diode-réseau associée à un équipement est agencée de sorte que le seul sens de communication autorisé est le sens partant de l'équipement vers l'appareil de collecte. En d'autres termes, la diode-réseau associée à un équipement est agencée de sorte que des données générées par l'équipement peuvent être transmises en provenance de l'équipement en question à destination de l'appareil de collecte. En revanche, des données ne peuvent être transmises en provenance de l'appareil de collecte à destination d'un équipement. De même, des données ne peuvent être transmises en provenance d'un équipement à destination d'un autre équipement.

De même, dans le cas où le réseau NTW comprend un nœud d'agrégation NA, chaque équipement de la pluralité d'équipement est connecté au nœud d'agrégation NA via la diode-réseau à laquelle l'équipement en question est associé. Les considérations sont alors similaires : un équipement peut transmettre des données à destination du nœud d'agrégation NA, mais ce dernier ne peut transmettre de données à destination d'un équipement. Là encore, deux équipements ne peuvent communiquer entre eux parce qu'une telle communication implique nécessairement de passer par le nœud d'agrégation NA, or celui-ci ne peut transmettre de données à un équipement.

Ces différents aspects concernant les communications permises et celles rendues impossibles par l'utilisation des diodes-réseaux sont illustrés en **[****Fig. 1****]** à l'aide de flèches.

Ainsi, à titre d'exemple, le module de communication COM3 de l'équipement EQ3 peut transmettre des données, via la diode-réseau DR3 associée à l'équipement EQ3, à destination du nœud d'agrégation NA. Le nœud d'agrégation peut alors agréger les données reçues en provenance de l'équipement EQ3 avec d'autres données reçues en provenance des autres équipements, ici les équipements EQ1 et EQ2, puis les transmettre à l'appareil de collecte APP. Ce sens de communication possible est illustré par la flèche partant de l'équipement EQ3 et allant vers l'appareil de collecte APP.

Toujours à titre d'exemple, le module de communication COM de l'appareil de collecte APP peut transmettre des données à destination du nœud d'agrégation NA. En revanche, les données ainsi reçues par le nœud d'agrégation NA en provenance de l'appareil de collecte APP ne peuvent être transmises à l'équipement EQ1, et plus exactement au module de communication COM1. En effet, la diode-réseau DR1 rend unidirectionnelle la connexion entre l'équipement EQ1 et le nœud d'agrégation NA dans le sens de l'équipement EQ1 vers le nœud d'agrégation NA. Ce sens de communication de l'appareil de collecte APP vers l'équipement EQ1 rendu impossible par la présence de la diode-réseau DR1 est illustré par la flèche barrée partant de l'appareil de collecte APP et allant vers l'équipement EQ1.

Enfin, toujours en référence à la **[****Fig. 1****],** le module de communication COM3 de l'équipement EQ3 peut transmettre des données, via la diode-réseau DR3 associée à l'équipement EQ3, à destination du nœud d'agrégation NA. En revanche, les données ainsi reçues par le nœud d'agrégation NA en provenance de l'équipement EQ3 ne peuvent être transmises à l'équipement EQ2, et plus exactement au module de communication COM2. En effet, la diode-réseau DR2 rend unidirectionnelle la connexion entre l'équipement EQ2 et le nœud d'agrégation NA dans le sens de l'équipement EQ2 vers le nœud d'agrégation NA. Ce sens de communication de l'équipement EQ3 vers l'équipement EQ2 rendu impossible par la présence de la diode-réseau DR2 est illustré par la flèche barrée allant de la diode-réseau DR3 à la diode-réseau DR2.

Par ailleurs, la diode-réseau associée à un équipement peut être implantée au sein de l'équipement en question. Dans l'exemple illustré en **[****Fig. 1****],** c'est le cas de la diode-réseau DR1 associée à l'équipement EQ1 et implantée au sein de celui-ci.

A l'inverse, la diode-réseau associée à un équipement peut être implantée dans le réseau NTW à l'extérieur de l'équipement en question. Dans l'exemple illustré en **[****Fig. 1****],** c'est le cas de la diode-réseau DR2 associée à l'équipement EQ2 et implantée dans le réseau NTW à l'extérieur de celui-ci. Il en est de même pour la diode-réseau DR3 associée à l'équipement EQ3 et implantée dans le réseau NTW à l'extérieur de celui-ci.

Dans un ou plusieurs modes de réalisation, la diode-réseau associée à un équipement comporte un photocoupleur connectant unidirectionnellement deux contrôleurs. Un des contrôleurs est situé du côté de l'équipement tandis que l'autre contrôleur est situé du côté de l'appareil de collecte APP ou du nœud d'agrégation NA.

En particulier, un dispositif unique peut intégrer le contrôleur de terminaison de toutes les diodes réseaux du nœud d'agrégation NA et de l'appareil de collecte APP.

Le photocoupleur, aussi appelé optocoupleur, est un composant électronique capable de transmettre un signal d'un circuit à un autre sans qu'il y ait de contact galvanique entre eux. Typiquement, le photocoupleur comporte une diode électroluminescente (plus connue sous l'acronyme « DEL » ou l'acronyme anglophone « LED ») combinée à un phototransistor comportant un émetteur, une base et un collecteur. Le courant électrique passe du collecteur du phototransistor à l'émetteur à condition que la base reçoive de la lumière (visible ou infrarouge).

Bien entendu, il est connu de l'Homme du métier qu'il existe d'autres types de dispositifs de type diode-réseau fonctionnellement similaires au photocoupleur décrit précédemment et permettant, donc, de rendre unidirectionnelle une connexion bidirectionnelle.

Enfin, comme illustré en **[****Fig. 1****],** le réseau NTW peut comprendre en outre un commutateur CMT.

Le commutateur CMT est configuré pour sélectivement activer ou désactiver au moins un dispositif de type diode-réseau pour pouvoir rétablir, si besoin, une connexion bidirectionnelle entre l'équipement associé au dispositif de type diode-réseau en question et l'appareil de collecte APP.

Dans l'exemple décrit ici, le commutateur CMT est configuré pour piloter la diode-réseau DR2 associée à l'équipement EQ2. Ainsi, le commutateur CMT peut permettre de désactiver la diode-réseau DR2 de manière à ce que la connexion entre l'équipement EQ2 et l'appareil de collecte APP soit de nouveau bidirectionnelle. Une fois la diode-réseau DR2 désactivée, il est alors possible de transmettre des données en provenance de l'appareil de collecte, ou en provenance du nœud d'agrégation NA, à destination de l'équipement EQ2. De même, il est alors également possible de transmettre des données en provenance d'un autre équipement de la pluralité d'équipements, par exemple ici les équipements EQ1 et EQ3, à destination de l'équipement EQ2.

Un tel commutateur CMT permet ainsi la mise à jour ou la configuration de l'équipement EQ2. Rétablir une connexion bidirectionnelle entre l'équipement EQ2 et l'appareil de collecte APP ou le nœud d'agrégation NA permet également de faciliter une intervention sur l'équipement EQ2, notamment en cas de dysfonctionnement.

Bien entendu, lorsque la diode-réseau associée à un équipement est implantée au sein même de l'équipement, comme c'est par exemple le cas pour la diode-réseau DR1 associée à l'équipement EQ1, le commutateur CMT peut être également intégré à l'équipement concerné.

La présente invention présente plusieurs avantages.

Tout d'abord, la présente invention permet d'améliorer la protection des données et l'intégrité des différents équipements d'un réseau de collecte de données. Ainsi, lorsqu'un équipement, par exemple une machine-outil, est compromis par un dysfonctionnement ou une intrusion malveillante, la propagation d'une telle intrusion ou d'un virus est fortement limitée par la présence de dispositifs de type diode-réseau qui empêchent la récupération d'informations ou de données issues des autres équipements ou de l'appareil de collecte.

Par ailleurs, la répartition des informations relatives à un savoir-faire ou à un secret industriel entre les différents équipements de la pluralité d'équipements du réseau permet d'en améliorer la protection puisque de telles informations ne peuvent être transmises à l'équipement corrompu. En effet, la présence des dispositifs de type diode-réseau empêchent le passage d'une telle communication vers l'équipement corrompu. Ainsi, la répartition sur un grand nombre d'équipements contribue à rendre inexploitable l'information extraite d'un équipement corrompu.

## Revendications

1. Equipement (EQ1, EQ2, EQ3) implanté au sein d'un réseau (NTW) de collecte de données comportant un appareil de collecte (APP), ledit équipement étant connecté à l'appareil de collecte via un dispositif de type diode-réseau (DR1, DR2, DR3) associé audit équipement, le dispositif de type diode-réseau étant agencé pour rendre unidirectionnelle la connexion entre ledit équipement et l'appareil de collecte dans le sens de l'équipement vers l'appareil de collecte.

2. Equipement selon la revendication 1, comprenant le dispositif diode-réseau associé.

3. Dispositif apte à recevoir des données générées par au moins un équipement (EQ1, EQ2, EQ3) d'un réseau (NTW) de collecte de données associé à au moins un dispositif de type diode-réseau (DR1, DR2, DR3), le réseau de collecte de données comportant un appareil de collecte (APP), le dispositif apte à recevoir des données étant connecté audit au moins un équipement via ledit au moins un dispositif de type diode-réseau, le dispositif de type diode-réseau étant agencé pour rendre unidirectionnelle la connexion entre ledit équipement et l'appareil de collecte dans le sens de l'équipement vers l'appareil de collecte.

4. Dispositif apte à recevoir des données selon la revendication 3, comprenant au moins un nœud d'agrégation (NA) adapté pour agréger les données générées par les équipements, l'appareil de collecte étant adapté pour collecter les données une fois celles-ci agrégées par ledit nœud d'agrégation.

5. Réseau (NTW) de collecte de données comprenant :
- au moins un équipement (EQ1, EQ2, EQ3), et
- un appareil de collecte (APP) adapté pour collecter des données générées par ledit au moins un équipement,
le réseau étant **caractérisé en ce qu'**il comprend en outre au moins un dispositif de type diode-réseau (DR1, DR2, DR3) respectivement associé audit au moins un équipement, l'équipement étant connecté à l'appareil de collecte via le dispositif de type diode-réseau associé, le dispositif de type diode-réseau étant agencé pour rendre unidirectionnelle la connexion entre ledit équipement et l'appareil de collecte dans le sens de l'équipement vers l'appareil de collecte.

6. Réseau selon la revendication 5, comprenant une pluralité d'équipements et une pluralité de dispositifs de type diode-réseau, au moins un équipement de la pluralité d'équipements étant connecté à l'appareil de collecte via au moins un dispositif de la pluralité de dispositifs de type diode-réseau.

7. Réseau selon la revendication 5 ou 6, comprenant en outre un nœud d'agrégation (NA) connecté à chaque équipement via le dispositif de type diode-réseau associé audit équipement, ledit nœud d'agrégation étant adapté pour agréger les données générées par les équipements, l'appareil de collecte étant adapté pour collecter les données une fois celles-ci agrégées par ledit nœud d'agrégation.

8. Réseau selon l'une des revendications 5 à 7, dans lequel un dispositif de type diode-réseau (DR1) associé à un équipement (EQ1) est implanté au sein dudit équipement.

9. Réseau selon l'une des revendications 5 à 8, dans lequel un dispositif de type diode-réseau (DR2, DR3) associé à un équipement (EQ2, EQ3) est implanté dans le réseau à l'extérieur dudit équipement.

10. Réseau selon l'une des revendications 5 à 9, comprenant en outre au moins un commutateur (CMT) configuré pour sélectivement activer ou désactiver au moins un dispositif de type diode-réseau pour pouvoir rétablir, si besoin, une connexion bidirectionnelle entre l'équipement associé audit dispositif de type diode-réseau et l'appareil de collecte.

11. Réseau selon l'une des revendications 5 à 10, dans lequel le réseau est au moins en partie un réseau filaire.

12. Réseau selon l'une des revendications 5 à 11, dans lequel le réseau est au moins en partie un réseau sans fil.

13. Réseau selon l'une des revendications 5 à 12, dans lequel au moins un équipement est une machine-outil.

14. Réseau selon l'une des revendications 5 à 13, dans lequel au moins un dispositif de type diode-réseau comporte un photocoupleur connectant unidirectionnellement deux contrôleurs.

15. Réseau selon l'une des revendications 5 à 14, comprenant une pluralité d'équipement, dans lequel un procédé de fonctionnement d'un ou plusieurs équipements ou un procédé de fabrication d'un produit par un ou plusieurs équipements est **caractérisé par** un ensemble d'informations réparties entre des équipements de la pluralité d'équipements.
